# EUROPEAN PATENT APPLICATION

(11) **EP 2 723 051 A1**
(43) Date of publication of application: **23.04.2014**
(21) Application number: 12800719.2
(22) Date of filing: 02.02.2012
(51) Int. Cl.: H04M 3/424

(54) **CALL PROCESSING METHOD, DEVICE AND SYSTEM**

(30) Priority: 14.06.2011 CN 201110159095
(71) Applicant: ZTE Corporation, Shenzhen, Guangdong 518057 (CN)
(72) Inventor: XU, Bin, Shenzhen Guangdong 518057 (CN); ZHANG, Jianfeng, Shenzhen Guangdong 518057 (CN); GE, Hao, Shenzhen Guangdong 518057 (CN)
(74) Representative: Novagraaf Technologies
(86) International application number: PCT/CN2012/070852
(87) International publication number: WO 2012/171347

(57) **Abstract**

Disclosed are a call processing method, device and system, for reminding a calling subscriber to call a called subscriber again after some time in the case that the called subscriber does not answer when the calling subscriber calls the called subscriber. The call processing method provided in the present invention includes: when a calling user equipment calls a called user equipment, if the calling user equipment has subscribed to a no-answer reminding color ring back tone service and the called user equipment does not answer within a certain period of time, then playing a no-answer reminding color ring back tone subscribed to by the calling user equipment for the calling user equipment; acquiring reminding indication information sent by the calling user equipment, and performing a call reminding operation for the calling user equipment according to the reminding indication information.

## Description

### Technical Field

The present invention relates to the field of communications, and particularly, to a call processing method, device and system.

### Background

Color ring back tone is a ring back tone service with special sound effects (such as music, song, storyline, dialogue) set by a called subscriber for a calling subscriber. The color ring back tone can fully show the special personality and taste of the subscriber and make the communication process interesting.

When a calling subscriber calls a called subscriber, if the called subscriber does not answer, after the calling subscribers hangs up for a period of time, due to being busy with other things, he may forget to call the called subscriber again and delay the processing of some important things. Since there is no automatic reminding mechanism in the related art, the calling subscriber cannot be reminded automatically to call the called subscriber again.

### Summary

In view of the above, the embodiments of the present invention provide a call processing method, device and system, which can remind a calling subscriber to call a called subscriber again in the case that the called subscriber does not answer when the calling subscriber calls the called subscriber.

A call processing method provided in an embodiment of the present invention includes:
when a calling user equipment calls a called user equipment, if the calling user equipment has subscribed to a no-answer reminding color ring back tone service and the called user equipment does not answer within a certain period of time, then playing, for the calling user equipment, a no-answer reminding color ring back tone subscribed to by the calling user equipment; and
acquiring reminding indication information sent by the calling user equipment, and performing a call reminding operation for the calling user equipment according to the reminding indication information.

A color ring back tone center provided in an embodiment of the present invention includes:
a media server configured to, when a calling user equipment calls a called user equipment, if the calling user equipment has subscribed to a no-answer reminding color ring back tone service and the called user equipment does not answer within a certain period of time, play a no-answer reminding color ring back tone subscribed to by the calling user equipment for the calling user equipment; and configured to acquire reminding indication information sent by the calling user equipment and forward the reminding indication information to a color ring back tone service server; and
the color ring back tone service server configured to acquire the reminding indication information sent by the calling user equipment and forwarded by the media server, and perform a call reminding operation for the calling user equipment according to the reminding indication information.

A call processing system provided in an embodiment of the present invention includes:
a core network configured to judge whether a calling user equipment has subscribed to a no-answer reminding color ring back tone service when the calling user equipment calls a called user equipment, and trigger a color ring back tone center if the calling user equipment has subscribed to the no-answer reminding color ring back tone service; and
the color ring back tone center configured to play a no-answer reminding color ring back tone subscribed to by the calling user equipment for the calling user equipment if the calling user equipment has subscribed to the no-answer reminding color ring back tone service and the called user equipment does not answer within a certain period of time; and acquire reminding indication information sent by the calling user equipment and perform a call reminding operation for the calling user equipment according to the reminding indication information.

In an embodiment of the present invention, when a calling user equipment calls a called user equipment, whether the calling user equipment has subscribed to a no-answer reminding color ring back tone service is judged; if the calling user equipment has subscribed to the no-answer reminding color ring back tone service and the called user equipment does not answer within a certain period of time, a no-answer reminding color ring back tone subscribed to by the calling user equipment is played for the calling user equipment; reminding indication information sent by the calling user equipment is acquired, and a call reminding operation is performed for the calling user equipment according to the reminding indication information. In this way, if the called subscriber does not answer when being called by the calling subscriber, the calling subscriber is automatically reminded to call the called subscriber again so that the subscriber can be prevented from delaying the processing of some affairs in time.

### Brief Description of the Drawings

Fig. 1 is a structural schematic diagram of a call processing system provided in an embodiment of the present invention;
Fig. 2 is a specific schematic flowchart of a call processing method provided in embodiment 1 of the present invention;
Fig. 3 is a specific schematic flowchart of a call processing method provided in embodiment 2 of the present invention;
Fig. 4 is a specific schematic flowchart of a call processing method provided in embodiment 3 of the present invention; and
Fig. 5 is a general schematic flowchart of a call processing method provided in an embodiment of the present invention.

### Detailed Description of the Embodiments

The embodiments of the present invention provide a call processing method, device and system, which can remind a calling subscriber to call a called subscriber again in the case that the called subscriber does not answer when the calling subscriber calls the called subscriber.

In order to enrich the service functions, the embodiments of the present invention propose a call processing solution, which can remind a subscriber to set a reminding indication in the case that the called subscriber does not answer when the calling subscriber calls the called subscriber, and further remind the calling subscriber to call the called subscriber again.

First, a calling color ring back tone subscriber can select whether to subscribe to a no-answer reminding color ring back tone function. After the no-answer reminding color ring back tone function is subscribed to, when the calling subscriber calls the called subscriber for a certain period of time (such as 40 s, the specific time can be set as required), the system will deem that the called subscriber does not answer by default. At this moment, the color ring back tone system plays a reminding color ring back tone for the calling subscriber, for example "The subscriber you are calling may not answer, please select a reminding time". The calling subscriber presses a key to select the reminding time (such as 50 min) to remind himself/herself to call the called subscriber again.

For example, the calling subscriber presses key 50#, then the system will send a short message to remind the calling subscriber to call the called subscriber again after 50 min. The default color ring back tone play time is 55 s (that is, the maximum waiting time), after 40 s, the system will play the reminding color ring back tone of the calling subscriber; however, if the called subscriber answers the phone during this period of time, the system will process according to a normal procedure; after hanging up, the calling subscriber will not be reminded either. If the called subscriber does not answer, 50 min after the calling subscriber presses the key, the system reminds the calling subscriber to call the called subscriber again, and if the called subscriber calls the calling subscriber or the calling subscriber himself remembers to call the called subscriber again during this period of time, the system will automatically eliminate the reminding record and no longer remind the calling subscriber.

That is to say, the no-answer reminding color ring back tone provided in the embodiments of the present invention is mainly used for avoiding the situation where the calling subscriber calls the called subscriber for some affairs, but the called subscriber does not answer, and the calling user forgets to call the called subscriber again due to being busy with something else and thus forgets to process some emergency affairs. Therefore, the embodiments of the present invention provide an automatic reminding call mechanism and are therefore suitable for some businessmen.

A call processing method provided in an embodiment of the present invention specifically includes the following steps.
a) A calling subscriber A calls a called subscriber B and is connected to a core network.
b) The core network judges that the calling subscriber A and the called subscriber B both subscribe to a color ring back tone service and the calling subscriber A has subscribed to a no-answer reminding color ring back tone service. A connection is established with a color ring back tone service server.
c) The color ring back tone service server triggers the color ring back tone service and performs a procedure of playing the color ring back tone of the called subscriber.
d) After 40 s (other time may also be set), the color ring back tone service server deems that the called subscriber does not answer by default, stops playing the color ring back tone of the called subscriber, and plays the no-answer reminding color ring back tone for the calling subscriber A.
d) The calling subscriber A presses a key (or keys) according to the prompt of the no-answer reminding color ring back tone, and the color ring back tone service server determines and records the reminding time.

There are three kinds of situations as follows for the subsequent processing.
Situation 1: the called subscriber B does not answer, the core network releases the call, and the called subscriber B does not call the calling subscriber A before the reminding time arrives, then the following steps are included after step d):
   e1) the core network reminds that the called subscriber B does not answer and releases the call;
   f1) after the reminding time set by the calling subscriber A arrives, the color ring back tone center sends a message to the calling subscriber A to remind the calling subscriber A to call the called subscriber B and clears the no-answer reminding record of the calling subscriber A stored in the server, wherein the no-answer reminding record comprises the reminding time, the identification of the calling subscriber A, the identification of the called subscriber B, etc.;
   g1) the calling subscriber A calls the called subscriber B again.
Situation 2: during the process that the calling subscriber A sets the reminding time, or, before the core network releases the call and after the calling subscriber A has set the reminding time, the called subscriber B answers the phone, then the following steps are included after step d):
   e2) during the process that the calling subscriber A sets the reminding indication information (which specifically may be the indication information about the reminding time), or, before the core network releases the call and after the calling subscriber A has set the reminding indication information, the called subscriber B answers the phone;
   f2) the color ring back tone service server requires a media server to release the connection with the calling subscriber A and clears the no-answer reminding record generated for the calling subscriber A in the server (if the no-answer reminding record has been stored);
   g2) the calling subscriber A communicates with the called subscriber B.
Situation 3: after the calling subscriber A sets the reminding indication information, if the called subscriber B calls the calling subscriber A when the set reminding time has not arrived, then the following steps are included after step d):
   e3) the original called subscriber B calls the original calling subscriber A and is connected to the core network;
   f3) the core network judges that subscribers A and B both subscribe to the color ring back tone service and a connection is established to the color ring back tone service server;
   g3) the color ring back tone service server triggers the color ring back tone service and performs a procedure of playing the color ring back tone of the original calling subscriber A; and clears the no-answer reminding record of the original calling subscriber A for the original called subscriber B stored in the server;
   h3) the original calling subscriber A answers the phone, and communication is conducted between the original calling subscriber A and the original called subscriber B.

Hereinafter, the system and service procedure provided in the embodiments of the present invention will be described in detail in conjunction with the accompanying drawings.

In the embodiments of the present invention, an IP multimedia system (IMS) color ring back tone is taken as an example for description.

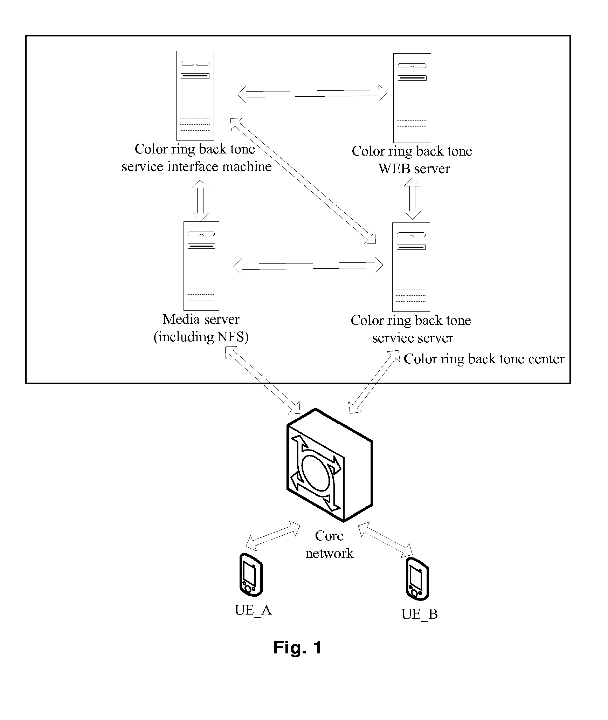

As shown in Fig. 1, the modules related to the calling processing system provided in the embodiments of the present invention and the interfaces thereof are described in detail as follows.

A color ring back tone center includes a color ring back tone service server, a color ring back tone WEB server, a color ring back tone interface machine, a media server (which includes a network file server (NFS)).

The color ring back tone service server is configured to complete service logic control of the color ring back tone service, complete the storage and query of the service data, complete the control to the media server, and is also configured to provide an interface to the color ring back tone WEB server so as to allow an operator or a terminal user to perform authorized customization and modification on the service data of the color ring back tone service server; and is also configured to provide the service logic of a no-answer color ring back tone.

The color ring back tone WEB server: the color ring back tone system provides an interface for an operator or a user in the form of WEB. The color ring back tone WEB server is mainly configured to accept the customization and modification of the color ring back tone data and the upload of a color ring back tone file by the administrator; and it is also responsible for operations such as previewing, ordering, setting, etc. a color ring back tone by a color ring back tone subscriber.

The color ring back tone WEB server is an optional device.

A color ring back tone interface machine mainly includes a color ring back tone core interface machine, a color ring back tone file uploading interface machine and a short message interface machine and so on. The color ring back tone core interface machine sends the operations performed by the subscriber such as audition, ordering, setting and so on to the color ring back tone service server for color ring back tone service processing. The color ring back tone file uploading interface machine sends the uploaded color ring back tone file in the form of WEB to the media server. The short message interface machine accesses the color ring back tone center to the short message service center (SMSC).

The color ring back tone interface machine is also an optional device.

The media server (including an NFS) completes the control signaling interaction with the color ring back tone service server and completes the playing of an audio/video file according to a predetermined mode; and the network file server (NFS) of the media server completes the storage of uploaded multimedia color ring back tone resource files.

User equipment (UE) is a user IP multimedia system (IMS) terminal. UE_A is a calling user equipment, and UE_B is a called user equipment.

The core network mainly includes a home subscriber server (HSS), a packet switching system (PSS) and a call session control function (CSCF), wherein the HSS is responsible for saving the subscription information about an IMS subscriber, including data such as basic identification, routing information and so on; the PSS is responsible for the core control logic of the IMS system; and the CSCF is responsible for the basic session routing function.

Hereinafter, the description of three specific embodiment procedures will be given for the abovementioned three situations respectively.

### Embodiment 1 (for the abovementioned situation 1)

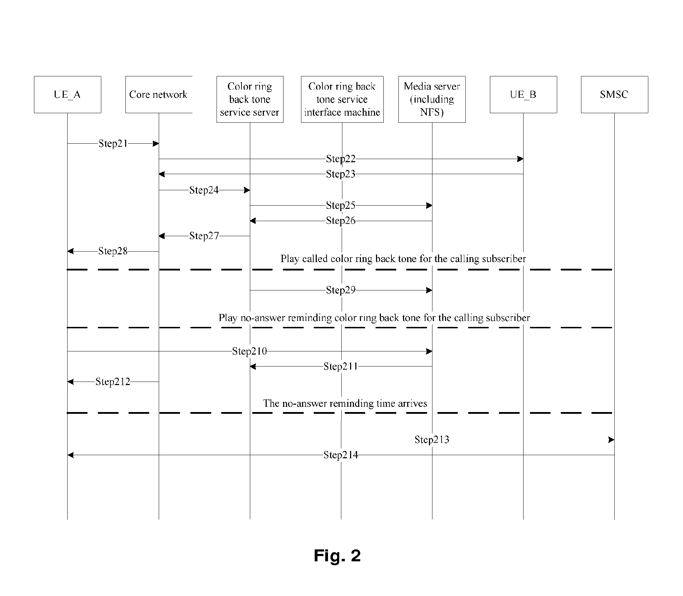

Taking a broadband call (media server playing) as an example, the call processing procedure is as shown in Fig. 2, including the following steps.
Step 21: a calling UE_A which has subscribed to a no-answer reminding color ring back tone calls a called UE_B, and the call is connected to a core network.
Step 22: the core network calls the called UE_B.
Step 23: the UE_B is idle and returns an ALERTING message to the core network.
Step 24: the core network queries the subscription information about the calling subscriber and the called subscriber and initiates a call to the color ring back tone service server if it is judged that the UE_A has subscribed to a no-answer reminding color ring back tone service and the UE_B has subscribed to a called color ring back tone service, wherein the message to the color ring back tone service server carries a color ring back tone access code.
Step 25: the color ring back tone service server triggers the called color ring back tone service according to the color ring back tone service access code and queries the color ring back tone media file to be played in the database; and the color ring back tone service server calls the media server and starts to perform media negotiation.
Step 26: the media server replies to the call and sends media information about the media server to the color ring back tone service server, wherein the media information includes the address, port and the selected codec for the media server to receive and send a media stream.
Step 27: the color ring back tone service server replies to the call of the core network, which reply carries the media information about the media server.
Step 28: the core network replies to the call of the UE_A, which reply carries the media information about the media server, the media negotiation ends, and the media server starts to play the called color ring back tone for the calling subscriber.
Step 29: after 40 s (which can be configured by the system), the color ring back tone service server deems that the called subscriber does not answer by default, stops playing the called color ring back tone, and controls the media server to play the no-answer reminding color ring back tone for the UE_A.
Step 210: the UE_A presses a key (or keys), the media server receives collected number information (that is, the key information pressed by the UE_A for indicating the reminding time), such as 50#, which represents to remind the UE_A to call the UE_B after 50 min.
Step 211: the media server sends a message to the color ring back tone service server, which message carries the key information pressed by the UE_A; the color ring back tone service server generates a no-answer reminding record for the UE_A in the database according to the key information pressed by the calling subscriber UE_A, wherein the no-answer reminding record includes the calling subscriber identification, called subscriber identification and the reminding time.
Step 212: the called subscriber UE_B does not answer, and the core network releases the call.
Step 213: before the reminding time arrives, the subscriber UE_B does not call the UE_A, or the UE_A does not call the UE _B again, after the reminding time arrives, the color ring back tone service server sends a message to the short message center to require the short message center to send a reminding short message to the UE_A. At the same time, the color ring back tone service server clears the no-answer reminding record for the UE_A.
Step 214: the short message center sends a reminding short message to the UE_A.

### Embodiment 2 (for the abovementioned situation 2)

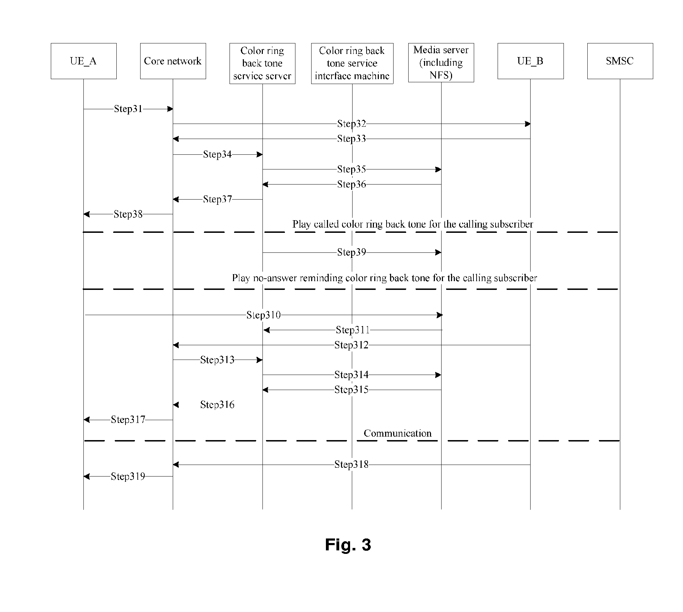

Taking a broadband call (media server playing) as an example, the call processing procedure is as shown in Fig. 3, including the following steps.
Step 31: a calling UE_A which has subscribed to a no-answer reminding color ring back tone calls a called UE_B, and the call is connected to a core network.
Step 32: the core network calls the called UE_B.
Step 33: the UE_B is idle and returns an ALERTING message to the core network.
Step 34: the core network queries the subscription information about the calling subscriber and the called subscriber and initiates a call to the color ring back tone service server if it is judged that the UE_A has subscribed to a no-answer reminding color ring back tone service and the UE_B has subscribed to a called color ring back tone service, wherein the message to the color ring back tone service server carries a color ring back tone access code.
Step 35: the color ring back tone service server triggers the called color ring back tone service according to the color ring back tone service access code and queries the color ring back tone media file to be played in the database; and the color ring back tone service server calls the media server and starts to perform media negotiation.
Step 36: the media server replies to the call and sends media information about the media server to the color ring back tone service server, wherein the media information includes the address, port and the selected codec for the media server to receive and send a media stream.
Step 37: the color ring back tone service server replies to the call of the core network, which reply carries the media information about the media server.
Step 38: the core network replies to the call of the UE_A, which reply carries the media information about the media server, the media negotiation ends, and the media server starts to play the called color ring back tone for the calling subscriber.
Step 39: after 40 s (which can be configured by the system), the color ring back tone service server deems that the called subscriber does not answer by default, stops playing the called color ring back tone, and controls the media server to play the no-answer reminding color ring back tone for the UE_A.
Step 310: the UE_A presses a key (or keys), the media server receives collected number information (that is, the key information pressed by the UE_A for indicating the reminding time), such as 50#, which represents to remind the UE_A to call the UE_B after 50 min.
Step 311: the media server sends a message to the color ring back tone service server, which message carries the key information pressed by the UE_A; the color ring back tone service server generates a no-answer reminding record for the UE_A in the database according to the key information pressed by the calling subscriber UE_A, wherein the no-answer reminding record includes the calling subscriber identification, called subscriber identification and the reminding time.
Step 312: the UE_B answers the phone and sends an answer message to the core network.

The UE_B may answer the phone during the process that the calling subscriber UE_A sets the reminding indication information or at any moment after the reminding indication information has been set and before the core network releases the call.
Step 313: the core network sends a message to the color ring back tone service server to require the color ring back tone service server to stop playing the color ring back tone and release the call; and the color ring back tone service server queries the no-answer reminding record set for the calling subscriber UE_A, if there is any record, then the color ring back tone service server clears the record, otherwise, no deletion operation is required.
Step 314: the color ring back tone service server sends a message to the media server to require the media server to stop playing the color ring back tone and release the call.
Step 315: the media server replies to a call release request, stops playing the color ring back tone and releases the resource.
Step 316: the color ring back tone service server replies to the call release request and releases the resource.
Step 317: the core network sends an answer message to the UE_A, and the calling subscriber starts to communicate with the called subscriber.
Step 318: the UE_B hangs up and the UE_B sends a hang-up message to the core network.
Step 319: the core network sends a hang-up message to the UE_A, and the communication between the calling subscriber and the called subscriber ends.

### Embodiment 3 (for the abovementioned situation 3)

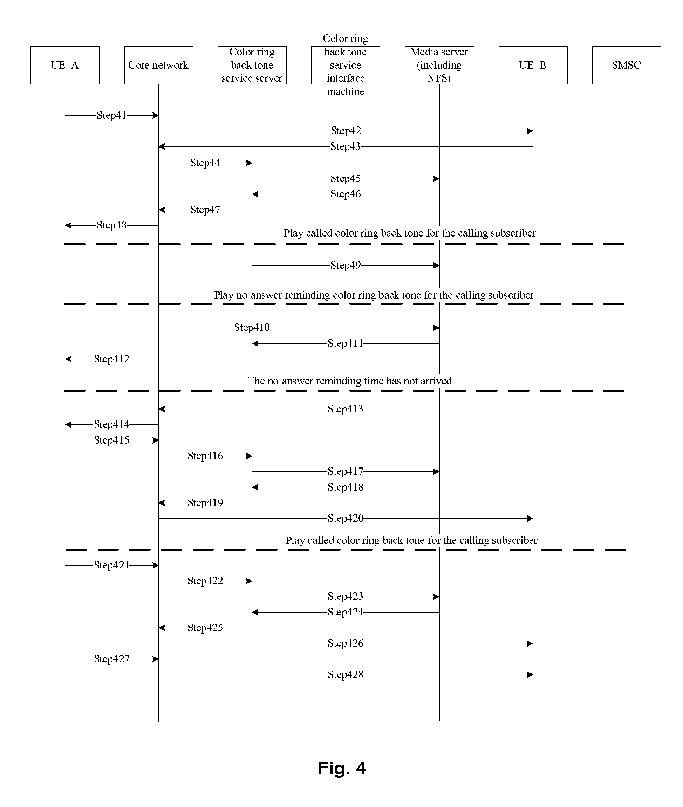

Taking a broadband call (media server playing) as an example, the call processing procedure is as shown in Fig. 4, including the following steps.
Step 41: a calling UE_A which has subscribed to a no-answer reminding color ring back tone calls a called UE_B, and the call is connected to a core network.
Step 42: the core network calls the called UE_B.
Step 43: the UE_B is idle and returns an ALERTING message to the core network.
Step 44: the core network queries the subscription information about the calling subscriber and the called subscriber and initiates a call to the color ring back tone service server if it is judged that the UE_A has subscribed to a no-answer reminding color ring back tone service and the UE_B has subscribed to a called color ring back tone service, wherein the message to the color ring back tone service server carries a color ring back tone access code.
Step 45: the color ring back tone service server triggers the called color ring back tone service according to the color ring back tone service access code and queries the color ring back tone media file to be played in the database; and the color ring back tone service server calls the media server and starts to perform media negotiation.
Step 46: the media server replies to the call and sends media information about the media server to the color ring back tone service server, wherein the media information includes the address, port and the selected codec for the media server to receive and send a media stream.
Step 47: the color ring back tone service server replies to the call of the core network, which reply carries the media information about the media server.
Step 48: the core network replies to the call of the UE_A, which reply carries the media information about the media server, the media negotiation ends, and the media server starts to play the called color ring back tone for the calling subscriber.
Step 49: after 40 s (which can be configured by the system), the color ring back tone service server deems that the called subscriber does not answer by default, stops playing the called color ring back tone, and controls the media server to play the no-answer reminding color ring back tone for the UE_A.
Step 410: the UE_A presses a key (or keys), the media server receives collected number information (that is, the key information pressed by the UE_A for indicating the reminding time), such as 50#, which represents to remind the UE_A to call the UE_B after 50 min.
Step 411: the media server sends a message to the color ring back tone service server, which message carries the key information pressed by the UE_A; the color ring back tone service server generates a no-answer reminding record for the UE_A in the database according to the key information pressed by the calling subscriber UE_A, wherein the no-answer reminding record includes the calling subscriber identification, called subscriber identification and the reminding time.
Step 412: the called subscriber UE_B does not answer, and the core network releases the call.
Step 413: when the reminding time has not arrived, the subscriber UE_B calls the subscriber UE_A, and the call is connected to the core network.
Step 414: the core network calls the called UE_A.
Step 415: the UE_A is idle and returns an ALERTING message to the core network.
Step 416: the core network queries the subscription information about the calling subscriber and the called subscriber and initiates a call to the color ring back tone service server if it is judged that the UE_A has subscribed to the called color ring back tone service, which message carries a color ring back tone access code.
Step 417: the color ring back tone service server triggers the called color ring back tone service according to the color ring back tone service access code and queries the color ring back tone media file to be played in the database; the color ring back tone service server calls the media server and starts to perform media negotiation, and deletes the no-answer reminding record of the subscriber UE_A.
Step 418: the media server replies to the call and sends media information about the media server to the color ring back tone service server, wherein the media information includes the address, port and the selected codec for the media server to receive and send a media stream.
Step 419: the color ring back tone service server replies to the call of the core network, which reply carries the media information about the media server.
Step 420: the core network replies to the call of the UE_B, which reply carries the media information about the media server, the media negotiation ends, and the media server starts to play the called color ring back tone for the calling subscriber.
Step 421: the UE_A answers the phone and sends an answer message to the core network.
Step 422: the core network sends a message to the color ring back tone service server to require the color ring back tone service server to stop playing the color ring back tone and release the call.
Step 423: the color ring back tone service server sends a message to the media server to require the media server to stop playing the color ring back tone and release the call.
Step 424: the media server replies to a call release request, stops playing the color ring back tone and release the resource.
Step 425: the color ring back tone service server replies to the call release request and release the resource.
Step 426: the core network sends an answer message to the UE_B, and the calling subscriber starts to communicate with the called subscriber.
Step 427: the UE_A hangs up and the UE_A sends a hang-up message to the core network.
Step 428: the core network sends a hang-up message to the UE_B, and the communication between the calling subscriber and the called subscriber ends.

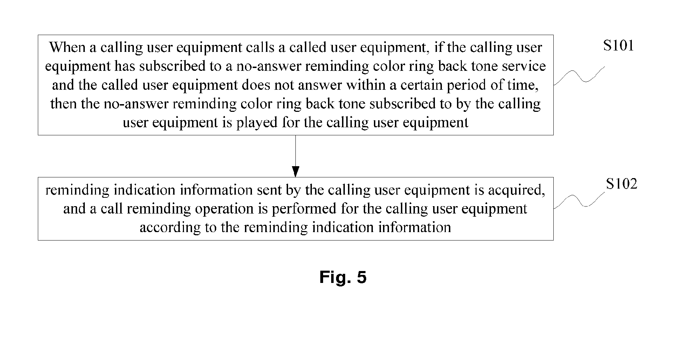

In summary, as shown in Fig. 5, a call processing method provided in an embodiment of the present invention includes the following steps:
S101, when a calling user equipment calls a called user equipment, if the calling user equipment has subscribed to a no-answer reminding color ring back tone service and the called user equipment does not answer within a certain period of time, then the no-answer reminding color ring back tone subscribed to by the calling user equipment is played for the calling user equipment; and
S102, reminding indication information sent by the calling user equipment is acquired, and a call reminding operation is performed for the calling user equipment according to the reminding indication information.

Preferably, performing the call reminding operation for the calling user equipment according to the reminding indication information comprises:
generating a no-answer reminding record for the calling user equipment according to the reminding indication information sent by the calling user equipment, wherein the no-answer reminding record comprises reminding time;
if the called user equipment does not answer when a maximum waiting time arrives, releasing the call; and
if there is not another call between the calling user equipment and the called user equipment from the release of the call to arrival of the reminding time, then sending reminding information to the calling user equipment to remind a calling subscriber to call a called subscriber again.

Preferably, sending the reminding information to the calling user equipment comprises:
sending the reminding information to the calling user equipment through a short message.

Preferably, performing the call reminding operation for the calling user equipment according to the reminding indication information comprises:
if the called user equipment answers before a maximum waiting time arrives, releasing the call and stopping playing the no-answer reminding color ring back tone for the calling user equipment;
if a no-answer reminding record has been generated for the calling user equipment according to the reminding indication information sent by the calling user equipment, then deleting the no-answer reminding record.

Preferably, performing the call reminding operation for the calling user equipment according to the reminding indication information comprises:
generating a no-answer reminding record for the calling user equipment according to the reminding indication information sent by the calling user equipment, wherein the no-answer reminding record comprises reminding time;
if the called user equipment does not answer when a maximum waiting time arrives, releasing the call; and
if there is another call between the calling user equipment and the called user equipment from the release of the call to arrival of the reminding time, then deleting the no-answer reminding record generated for the calling user equipment.

A color ring back tone center provided in an embodiment of the present invention includes:
a media server configured to, when a calling user equipment calls a called user equipment, if the calling user equipment has subscribed to a no-answer reminding color ring back tone service and the called user equipment does not answer within a certain period of time, play a no-answer reminding color ring back tone subscribed to by the calling user equipment for the calling user equipment; and configured to acquire reminding indication information sent by the calling user equipment and forward the reminding indication information to a color ring back tone service server; and
the color ring back tone service server configured to acquire the reminding indication information sent by the calling user equipment and forwarded by the media server, and perform a call reminding operation for the calling user equipment according to the reminding indication information.

The color ring back tone service server is configured to generate a no-answer reminding record for the calling user equipment according to the reminding indication information, wherein the reminding indication information comprises reminding time; trigger a core network to release the call if the called user equipment does not answer when a maximum waiting time arrives; and control a short message center to send reminding information to the calling user equipment to remind a calling subscriber to call a called subscriber again if there is not another call between the calling user equipment and the called user equipment from the release of the call to arrival of the reminding time.

Alternatively,
the color ring back tone service server is configured to trigger a core network to release the call and stop playing the no-answer reminding color ring back tone for the calling user equipment if the called user equipment answers before a maximum waiting time arrives; and delete a no-answer reminding record if the no-answer reminding record has been generated for the calling user equipment according to the reminding indication information sent by the calling user equipment.

Alternatively,
the color ring back tone service server is configured to generate a no-answer reminding record for the calling user equipment according to the reminding indication information, wherein the no-answer reminding record comprises reminding time; trigger a core network to release the call if the called user equipment does not answer when a maximum waiting time arrives; and delete the no-answer reminding record generated for the calling user equipment if there is another call between the calling user equipment and the called user equipment from the release of the call to arrival of the reminding time.

A call processing system provided in an embodiment of the present invention includes:
a core network configured to judge whether a calling user equipment has subscribed to a no-answer reminding color ring back tone service when the calling user equipment calls a called user equipment, and trigger a color ring back tone center if the calling user equipment has subscribed to the no-answer reminding color ring back tone service; and
the color ring back tone center configured to play a no-answer reminding color ring back tone subscribed to by the calling user equipment for the calling user equipment if the calling user equipment has subscribed to the no-answer reminding color ring back tone service and the called user equipment does not answer within a certain period of time; and acquire reminding indication information sent by the calling user equipment and perform a call reminding operation for the calling user equipment according to the reminding indication information.

Preferably, the color ring back tone center includes:
a media server configured to send the acquired reminding indication information sent by a calling user equipment to a color ring back tone service server; and
the color ring back tone service server configured to generate a no-answer reminding record for the calling user equipment according to the reminding indication information, wherein the reminding indication information comprises reminding time; trigger a core network to release the call if the called user equipment does not answer when a maximum waiting time arrives; and control a short message center to send reminding information to the calling user equipment to remind a calling subscriber to call a called subscriber again if there is not another call between the calling user equipment and the called user equipment from the release of the call to arrival of the reminding time.

Preferably, the short message center sends reminding information to the calling user equipment through a short message.

Alternatively, the color ring back tone center includes:
a media server configured to send the acquired reminding indication information sent by a calling user equipment to a color ring back tone service server; and
the color ring back tone service server configured to trigger a core network to release the call and stop playing the no-answer reminding color ring back tone for the calling user equipment if the called user equipment answers before a maximum waiting time arrives; and delete a no-answer reminding record if the no-answer reminding record has been generated for the calling user equipment according to the reminding indication information sent by the calling user equipment.

Alternatively, the color ring back tone center includes:
a media server configured to send the acquired reminding indication information sent by a calling user equipment to a color ring back tone service server; and
the color ring back tone service server configured to generate a no-answer reminding record for the calling user equipment according to the reminding indication information, wherein the no-answer reminding record comprises reminding time; trigger a core network to release the call if the called user equipment does not answer when a maximum waiting time arrives; and delete the no-answer reminding record generated for the calling user equipment if there is another call between the calling user equipment and the called user equipment from the release of the call to arrival of the reminding time.

Those skilled in the art shall understand that the embodiments of the present invention can be provided as methods, systems, or computer program products. Therefore, the present invention can adopt a complete hardware embodiment, a complete software embodiment, or a form of combination of software and hardware aspect embodiments. Moreover, the present invention can adopt a form of computer program product implemented in one or more computer usable storage medium (including but not limited to magnetic memory and optical memory and so on) containing computer usable program codes.

The present invention is described with reference to the flowcharts and/or block diagrams of the methods, devices (systems) and computer program products according to the embodiments of the present invention. It shall be understood that each flow and/or block of the flowcharts and/or block diagrams and any combination of the flow and/or block of the flowcharts and/or block diagrams can be realized with computer program instructions. These computer program instructions can be provided to the processors of general-purpose computers, special-purpose computers, embedded processors or other programmable data processing devices so as to generate a machine, so that a system which is used for realizing the functions specified in one or more flows of the flowcharts and/or one or more blocks of the block diagrams with the instructions executed by the processors of computers or other programmable data processing devices.

These computer program instructions can also be stored in a computer readable memory which can guide computers or other programmable data processing devices to operate in a specific manner, so that the instructions stored in the computer readable memory generate an article including an instruction system, which instruction system realizes the functions specified in one or more flows of the flowcharts and/or one or more blocks of the block diagrams.

These computer program instructions can also be loaded in computers or other programmable data processing devices, so that a series of operation steps are performed on the computers or other programmable data processing devices so as to generate computer-implemented processing, and then the instructions executed in the computers or other programmable data processing devices provide steps for realizing the functions specified in one or more flows of the flowcharts and/or one or more blocks of the block diagrams.

Apparently, those skilled in the art can make various modifications and variations to the present invention without departing from the spirit and scope of the present invention. Thus, if these modifications and variations of the present invention belong to the scope of the claims of the present invention and an equivalent technology thereof, then the present invention is also intended to contain these modifications and variations.

## Claims

1. A call processing method, **characterized by** comprising:
when a calling user equipment calls a called user equipment, if the calling user equipment has subscribed to a no-answer reminding color ring back tone service and the called user equipment does not answer within a certain period of time, then playing, for the calling user equipment, a no-answer reminding color ring back tone subscribed to by the calling user equipment; and
acquiring reminding indication information sent by the calling user equipment, and performing a call reminding operation for the calling user equipment according to the reminding indication information.

2. The method according to claim 1, **characterized in that** performing the call reminding operation for the calling user equipment according to the reminding indication information comprises:
generating a no-answer reminding record for the calling user equipment according to the reminding indication information sent by the calling user equipment, wherein the no-answer reminding record comprises reminding time;
if the called user equipment does not answer when a maximum waiting time arrives, releasing the call; and
if there is not another call between the calling user equipment and the called user equipment from the release of the call to arrival of the reminding time, then sending reminding information to the calling user equipment to remind a calling subscriber to call a called subscriber again.

3. The method according to claim 2, **characterized in that** sending the reminding information to the calling user equipment comprises:
sending the reminding information to the calling user equipment through a short message.

4. The method according to claim 1, **characterized in that** performing the call reminding operation for the calling user equipment according to the reminding indication information comprises:
if the called user equipment answers before a maximum waiting time arrives, releasing the call and stopping playing the no-answer reminding color ring back tone for the calling user equipment;
if a no-answer reminding record has been generated for the calling user equipment according to the reminding indication information sent by the calling user equipment, then deleting the no-answer reminding record.

5. The method according to claim 1, **characterized in that** performing the call reminding operation for the calling user equipment according to the reminding indication information comprises:
generating a no-answer reminding record for the calling user equipment according to the reminding indication information sent by the calling user equipment, wherein the no-answer reminding record comprises reminding time;
if the called user equipment does not answer when a maximum waiting time arrives, releasing the call; and
if there is another call between the calling user equipment and the called user equipment from the release of the call to arrival of the reminding time, then deleting the no-answer reminding record generated for the calling user equipment.

6. A color ring back tone center, **characterized by** comprising:
a media server configured to, when a calling user equipment calls a called user equipment, if the calling user equipment has subscribed to a no-answer reminding color ring back tone service and the called user equipment does not answer within a certain period of time, play a no-answer reminding color ring back tone subscribed to by the calling user equipment for the calling user equipment; and configured to acquire reminding indication information sent by the calling user equipment and forward the reminding indication information to a color ring back tone service server; and
the color ring back tone service server configured to acquire the reminding indication information sent by the calling user equipment and forwarded by the media server, and perform a call reminding operation for the calling user equipment according to the reminding indication information.

7. The color ring back tone center according to claim 6, **characterized in that** the color ring back tone service server performing the call reminding operation for the calling user equipment according to the reminding indication information comprises:
the color ring back tone service server is configured to generate a no-answer reminding record for the calling user equipment according to the reminding indication information, wherein the reminding indication information comprises reminding time; trigger a core network to release the call if the called user equipment does not answer when a maximum waiting time arrives; and control a short message center to send reminding information to the calling user equipment to remind a calling subscriber to call a called subscriber again if there is not another call between the calling user equipment and the called user equipment from the release of the call to arrival of the reminding time.

8. The color ring back tone center according to claim 6, **characterized in that** the color ring back tone service server performing the call reminding operation for the calling user equipment according to the reminding indication information comprises:
the color ring back tone service server is configured to trigger a core network to release the call and stop playing the no-answer reminding color ring back tone for the calling user equipment if the called user equipment answers before a maximum waiting time arrives; and delete a no-answer reminding record if the no-answer reminding record has been generated for the calling user equipment according to the reminding indication information sent by the calling user equipment.

9. The color ring back tone center according to claim 6, **characterized in that** the color ring back tone service server performing the call reminding operation for the calling user equipment according to the reminding indication information comprises:
the color ring back tone service server is configured to generate a no-answer reminding record for the calling user equipment according to the reminding indication information, wherein the no-answer reminding record comprises reminding time; trigger a core network to release the call if the called user equipment does not answer when a maximum waiting time arrives; and delete the no-answer reminding record generated for the calling user equipment if there is another call between the calling user equipment and the called user equipment from the release of the call to arrival of the reminding time.

10. A call processing system, **characterized by** comprising:
a core network configured to judge whether a calling user equipment has subscribed to a no-answer reminding color ring back tone service when the calling user equipment calls a called user equipment, and trigger a color ring back tone center if the calling user equipment has subscribed to the no-answer reminding color ring back tone service; and
the color ring back tone center configured to play a no-answer reminding color ring back tone subscribed to by the calling user equipment for the calling user equipment if the calling user equipment has subscribed to the no-answer reminding color ring back tone service and the called user equipment does not answer within a certain period of time; and acquire reminding indication information sent by the calling user equipment and perform a call reminding operation for the calling user equipment according to the reminding indication information.
